# EUROPEAN PATENT SPECIFICATION

(11) **EP 1 313 375 B1**
(45) Date of publication and mention of the grant of the patent: **30.06.2004**
(21) Application number: 01960199.6
(22) Date of filing: 23.08.2001
(51) Int. Cl.: A23J 1/12

(54) **A METHOD FOR THE SEPARATION OF WHEAT FLOUR USING A TRANSGLUTAMINASE ENZYME**
VERFAHREN ZUR ABTRENNUNG VON WEIZENMEHL UNTER VERWENDUNG EINES TRANSGLUTAMINASE-ENZYMS
PROCEDE DE SEPARATION DE LA FARINE DE BLE A L'AIDE D'UNE ENZYME TRANSGLUTAMINASE

(30) Priority: 25.08.2000 DK 200001260
(43) Date of publication of application: 28.05.2003
(73) Proprietor: Novozymes A/S, 2880 Bagsvaerd (DK)
(72) Inventor: OLSEN, Hans, Sejr, DK-2840 Holte (DK)
(86) International application number: PCT/DK2001/000554
(87) International publication number: WO 2002/015713

(56) References cited:
- EP-A- 0 730 829
- WO-A-01/17363
- US-A- 3 951 938
- US-A- 4 217 414
- P L WEEGELS ET AL: "Enzymes as a processing aid in the separation of wheat flour into starch and gluten" STARCH/STÄRKE, vol. 44, no. 2, 1992, pages 44-48, XP002902143

## Description

The present invention relates to the field of wheat flour separation. The invention discloses a method for the separation of wheat flour, compositions for the separation of wheat flour, and the use thereof. Further the invention relates to a fraction consisting essentially of gluten, and a product comprising said fraction.

### Background of the invention

The industrial implications of wheat flour and the products obtained from its separation are receiving increasing attention. Wheat flour may be separated into fractions of starch, gluten and fibres. In the separation of wheat flour the very nature of the flour protein, i.e. gluten, as being water insoluble presents a challenge desirable to overcome.

Gluten consists primarily of proteins, glutenin and gliadin. Upon hydration and during processing gliadin and glutenin interact to form a network. The proteins of wheat flour form a network with disulphide bridges (S-S-bridges). The network is stronger, the more sulphur bridges are present. The network entraps carbon dioxide formed during fermentation creating the characteristic elasticity of the wheat flour dough. The elastic properties of gluten are due to the glutenin fraction and the viscous properties come from the gliadin fraction. It is therefore a fact that the quality of the flour for the purpose of baking is highly dependent on the amount of gluten contained in the flour. Gluten may be added to flour of poor quality to improve the baking'properties of the flour.

Prior art attempts to separate wheat flour have been made. US 4,217,414, US 3,951,938 and GB 2 032 245 all describe examples of methods for the separation of wheat flour and the recovery of wheat gluten. Here the separation of wheat flour into gluten and starch fractions are performed by the means of mechanical processing. The mechanical separation methods described in the references are centrifugation, screening, decanting or milling.

The application of mechanical techniques of separation provided for fractions of gluten and starch is known. However, to obtain less contaminated fractions effort was directed toward improving the purity of the fractions.

The addition of enzymes to the flour or dough proved to be a successful way of achieving an improved separation. The added enzymes are capable of reacting with the flour and thereby improve the separation quality of the gluten.

In the prior art numerous references disclose such use of gluten improving enzymes. Among those are Weegels et al. (Weegels, P.L., Marseille, J.P., and Hamer, R.J., 1992, Starch/starke 44, 2, pp. 44-48) who describe the use of enzymes as a processing aid in the separation of wheat flour into starch and gluten. The enzymes mentioned are lipase, hemicellulase and cellulase.

Further, Christophersen et al. (Christophersen, C., Andersen, E., Jakobsen, T. S., and Wagner, P., Starch/Stärke, 1997, 49, pp. 5-12) describe the successful use of a xylanase to improve the yield of gluten and starch, without apparent negative effects on the gluten quality.

Formerly it has not been possible to obtain gluten fractions from prior art processes of wheat flour separation having a high content of pure protein, such as gluten fractions consisting essentially of gluten, having a very low content of starch or fibres of the xylan or arabinoxylan type.

### Summary

It is an object of the present invention to provide for a method for the separation of wheat flour into one gluten fraction and at least one other fraction, comprising the steps of:
a) mixing the flour and a liquid and a transglutaminase enzyme obtaining a dough,
b) separating the dough into a fraction comprising gluten and at least one other fraction,
c) recovering at least the gluten fraction.

The present invention permits the separation of gluten from any quality of wheat flour, even from wheat flour of poor quality, such as flour used for fodder.

By the present method an improved separation of wheat flour is obtained. The improvement in the separation of the wheat flour increases the yield of gluten and starch fractions by providing a more efficient method of separation. Further, according to the invention the separated gluten is of a higher quality, (i.e. less contaminated with other wheat flour compo-. nents, such as starch or fibres) than gluten fractions obtained according to the prior art.

Further, the invention relates to a composition for the separation of wheat flour into one gluten fraction, and at least one other fraction, comprising a transglutaminase enzyme.

The compositions of the invention may be used for the separation of wheat flour.

The gluten fraction obtained may be added to flour to increase the gluten content, such as to enhance poor quality flour, and thereby improving the baking quality of the flour.

### Drawings

Fig. 1 shows an example of the steps of a process for the separation of wheat flour on sieves.
Fig. 2 shows an example of the steps of a process for the separation of wheat flour by the means of a decanter centrifuge.

### Detailed description of the invention

Due to the significance of the industrial applications of wheat flour much attention is given to the development of separation methods for wheat flour. The present invention reveals a method for the improved separation of wheat flour into starch and gluten by using a transglutaminase enzyme, whereby gluten of a high quality is obtained.

The two main components of wheat flour are gluten and starch. After separation the vitality of wheat gluten is preserved due to controlled drying. When hydrated, the dried gluten must possess the same vitality as the fresh gluten. The vitality of the separated gluten may be determined by the means of wheat gluten vitality tests, such as the farinograph test, or the SDS (sodium dodecyl sulphate) sedimentation test used to determine the degree of denaturation of the gluten. The denaturation of the gluten may occur during the drying step, and great care must therefore be taken to ensure a gentle drying procedure.

Yet, a further parameter correlating to the vitality of gluten is the protein dry matter ratio, describing the purity of the gluten. The higher the amount of protein of dry matter, the better the quality of gluten. In the present context the term "protein" is meant to equal the term "gluten". The purity of the gluten may be determined by applying the Kjeldahl analysis, and a dry matter determination analysis.

Gluten may be used in the food industry, such as in bakery products, pet foods, meat products and as mentioned above in flour fortification. In the case of the latter application it is important that the gluten creates a visco-elastical dough ball, having good elasticity and extensibility properties, and that it is capable of cohering to a wide variety of products, thereby improving texture, strength and nutritional content of the food item in question.

In the baking industry, a high vitality of gluten is correlated with a high baking quality, i.e. a high bread volume. The higher the denaturation degree, measured by the methods described above, the lower the vitality of the gluten, and the lower the baking quality. Further, the higher the amount of protein of dry matter, measured as mentioned above, the better the baking quality.

By applying the method of the present invention it is possible to obtain a gluten fraction consisting essentially of gluten. In the present context the term "consists essentially of" is meant to define a fraction wherein the content of gluten is at least 80% protein of dry matter. In a preferred embodiment the gluten content is at least 90%, preferred 95%, more preferred 97% protein of dry matter, and in a most preferred embodiment the gluten fraction is consisting of protein only (i.e., gluten only - 100%). The method of the invention additionally provides for an increased yield of gluten from wheat independent of the wheat variety.

The method may be applied to any kind of wheat. Modern wheat varieties are classified as winter wheat and spring wheat. Wheat varieties may be hard grained or soft grained. Hard grained varieties normally have a large content of gluten. The flour of the latter varieties is preferably used in the baking industry for making products, such as bread. In case of the soft grained wheat varieties the flour thereof may be used for the production of cakes, biscuits, and fodder. Durum wheat is hard grained and the flour is used for pasta products. Wheat in general may also be used for the manufacture of beer and whiskey. Independent of the wheat variety the present method improves the gluten yield obtainable from said soft varieties.

Besides gluten another main wheat component is starch. Wheat starches are classified according to their degree of purity. The grades are denominated A and B, respectively.

Grade-A starch has a particle size of 20-35 microns and grade-B starch has a particle size of 2-10 microns. Grade-A starch is a versatile product providing strength and a pleasing texture to a variety of foods. Low levels of protein and fibre insure that grade-A starch gelatinises at low temperatures producing a smooth paste. The paste may be applied to foods such as, baby food, soups, sauces, gravies, sour cream, and dips. Grade-B starch has a higher protein content and a lower density.

There are a vast number of areas in which starches may be applied, such as in glucose syrup production and in sweetening production in general.

According to this invention at least one other fraction is obtained, said fraction comprising starch and optionally other wheat constituents, such as fibres. Preferably, the at least one other fraction consists essentially of no gluten.

Accordingly, the other fraction(s) of the present invention consists of essentially no gluten. By the term "essentially" is meant that the gluten content in the other fractions are less than 20%, preferably less than 10%. In a more preferred embodiment at least two fractions are obtained, one of said other fractions being a starch fraction. The starch fraction is substantially free of gluten and also substantially free of wheat constituents, being an essentially pure starch fraction.

It is an object of the invention to obtain a substantially pure starch fraction.

The method is conducted by mixing wheat flour and a liquid, said liquid being acceptable in products intended for animal and human consumption, and a transglutaminase enzyme.

In the present invention the mixing takes place in an electrically operated mixer. However, the mixing may take place in any suitable way. In a preferred embodiment of the invention water is preferred as a liquid.

The mixing may be conducted by mixing the flour and the enzyme in a first step, followed by the addition of the liquid.

Furthermore, the enzyme of the invention may be in a dry form or in a liquid form, and may be applied to the flour as such, dependent on the requirement of the timing of the separation process as described below.

In one embodiment of the invention the flour is mixed with the enzyme in a dry form. This method allows for the preparation of a flour and enzyme mixture that may not be further processed immediately after mixing, but may in fact be kept for use at a later point in time. As the process is desired to proceed, in a second step the liquid may be added to the flour and enzyme mixture.

In another embodiment the flour may be mixed with the enzyme in a liquid form. By doing so the enzyme reaction may begin immediately after the mixing, and may thus be fully complete by the time the wheat flour separation process is meant to continue by, in a second step, adding the liquid. When adding the enzyme in a dry form the holding time for the flour and enzyme mixture may be up to 3 months, such as up to six months, or longer dependent on the type of enzyme applied and physical parameters, such as storage conditions, humidity and temperature. By using this procedure the resting time may be minimised, preferably eliminated once the actual separation process begins, due to the fact that the enzyme reaction by then may be partly or fully completed, again dependent on the parameters mentioned above.

In a further embodiment of the invention the flour and the liquid are mixed in a first step obtaining a batter, and whereto in a second step the enzyme is added. This provides for the initiation of the immediate action of the enzyme according to the invention, in the wheat separation process.

Accordingly, the flour mixture (i.e. flour and enzyme) of the invention may be dry. or it may be liquid. In case of the former it is advantageous that the enzyme preparation is a dry product, e.g. a non-dusting granulate, whereas in the latter case the enzyme preparation may be in liquid form.

For the enzyme reaction of the invention to occur oxygen must be present. The level of oxygen present must be sufficient to ensure the reaction to take place, i.e. oxygen may not be the limiting factor of the chemical reaction.

According to the invention in one embodiment step a) may comprise mixing the flour and a liquid obtaining a dough, resting the dough, and adding a transglutaminase enzyme to the dough.

The time needed for resting the dough may be any suitable time. The resting time may be dependent upon the method chosen to mechanically process the dough for the purpose of obtaining individual fractions of gluten and starch, or it may depend upon the wheat variety used.

In yet another embodiment of the present invention step a) may comprise mixing the flour and a liquid and the transglutaminase enzyme obtaining a dough, followed by resting the dough prior to the separating step b) of the invention.

In a further embodiment of the invention the dough is diluted prior to the separating step b). The dilution of the dough may be in the order of 1.5:1, preferably 2:1.

The term "dough" in the present context is meant to be distinguished from the term "batter", the latter containing more liquid than a dough, such as 3 to 4 times more liquid than a dough. Accordingly, the diluted dough of the invention may be referred to as batter.

The enzyme of the invention may be applied to the flour mixture alone or the enzyme may be applied in combination with another enzyme, such as an enzyme selected from the group consisting of hemicellulases, cellulases, xylanases, proteases and dehydrogenases.

The pH value is preferably within a range suitable for the enzymatic activity. In one embodiment of the invention the dough has a pH value of between 4.5 and 8.0, preferably between 5.0 and 6.5. It is preferred that the pH is the non-regulated pH of the batter and dough, and that no pH regulators are added.

Further, according to the invention the temperature of the dough or batter is preferably between 10-60°C, more preferably between 20-50°C, and most preferably between 35-45°C.

When the mixing step is accomplished the dough obtained is subjected to a separating step.

The separating step may be conducted by a variety of methods suitable for the separation of the dough of the invention, i.e., the separating method may rely on differences in particle size between gluten and starch (fibres) and thus rely on particle weight.

In one widely used embodiment of the invention the dough is separated by the means of centrifugation. According to this method the dough is centrifuged thereby obtaining a heavy phase containing pure starch and a free flowing light phase containing the gluten.

In another embodiment of the present invention the separating process is performed by the means of screening. The screening may be conducted by arranging at least a gluten screen, for obtaining the gluten fraction. The screen size may vary dependent on the nature of the material to be screened. For example the screen for gluten may have the size of 500 µ, or 400 µ, or 200 µ, or 125 µ. The screening method may furthermore comprise two or more screens, the first for gluten, and the other (s) for one or more starch fractions and/or fibre fractions.

It is of importance that the screens are adapted to the gluten particle size, which is regulated by the enzymatic treatment during the mixing step.

The screening method is preferably conducted with diluted dough, whereby the starch and fibres are washed through the gluten particle network, leaving the gluten particles on the first screen.

In another embodiment of the present invention the separating process is performed by the means of decanting. The decanting process may begin by homogenising the batter in a homogeniser. Here shear forces break up the matrix. After this the mixture is passed through a decanter centrifuge capable of separating the dough into distinct phases, such as starch and gluten phases. The gluten phase may be further processed by additional washing and centrifugation or screening.

Yet another method of separating according to the invention may be air classification. In this method the wheat flour is separated into fractions, i.e. starch and gluten, by passing the flour through a spiral air stream. The particles in the flour will separate according to size, resulting in starch and gluten fractions. This method may advantageously be applied to the separation of the stored flour and enzyme mixture described earlier.

In another aspect of the present invention separating process is by the means of a hydrocyclone. In the hydrocyclone apparatus the diluted mixture is applied to the top of a static cone shaped container. The mixture is rotating inside the container and the heavier particles will settle in the lower fraction of the mixture, whereas the lighter particles will be present in the top fraction of the mixture.

The methods applied for the separating process may be one method, or it may be a combination of more processes.

The separating step is followed by a recovering step, wherein the gluten fraction is recovered. The gluten fraction thus obtained may be kept as a suspension of gluten in a liquid or it may subsequently be dried. The latter provides for the option of processing and storing the gluten for later purposes. It is an object of the invention that the separated gluten maintain its characteristic properties, having properties identical to the original gluten. The drying step is especially crucial for the conservation of the gluten properties. Too forceful a drying process may result in a considerable loss in gluten quality.

According to the invention the gluten may be dried in a ring dryer, or it may be dried in a fluid bed dryer. In the ring dryer process the wet gluten is fed into a ring duct after a size reduction in a disintegrator. Upon entering the ring duct the gluten is mixed with circulating gluten particles that are already partially dried. Dried gluten particles are removed from the ring by a manifold. The principle behind the fluid bed dryer is similar to the ring dryer, except the fluid bed dryer is arranged horizontally and air is entering the bed from below.

In a preferred embodiment at least one starch fraction is obtained, which fraction(s) may be further processed as applicable.

The present invention further relates to a composition for the separation of wheat flour into one gluten fraction and at least one other fraction, comprising at least one transglutaminase enzyme.

The composition is preferably suitable for mixing with the flour as described above.

According to the invention the composition may comprise at least one other enzyme. Said other enzyme may be an enzyme for enhancing the gluten separation, e.g. an enzyme with affinity to the non-starch carbohydrate fractions, fibres or soluble arabinoxylan fractions.

The more specific combination of components for the composition according to the invention is dependent upon the type of flour used for the separation, and upon the purpose of the application of gluten obtained by the invention.

According to the invention the enzyme may be from fungal (including filamentous fungi and yeasts) or bacterial origin.

The enzyme may for example be a transglutaminase derived from the organisms described in WO 96/22366 or in WO 99/60200 (p. 10-11); in particular from a transglutaminase derived from a strain of *Streptoverticillium, Streptomyces, Physarum, Oomycetes,* or *Phytophthora;* preferred transglutaminases are derived from *Phytophora cactorum* and *Streptoverticillium mobaraense* (available from Ajinomoto). The transglutaminase enzyme may be added in an amount of 0.00005 - 0.005 mg transglutaminase enzyme protein per gram gluten dry matter, in particular in an amount of 0.0002 - 0.002 mg transglutaminase enzyme protein per gram gluten dry matter.

The enzyme of the invention may be obtained from the micro-organism in question by the use of any suitable technique. For instance, an enzyme preparation may be obtained by fermenting a micro-organism and subsequently isolating the enzyme containing preparation from the fermented broth or micro-organism by methods known in the art. According to the invention a more preferred embodiment is the use of recombinant DNA techniques as known in the art. Such methods normally comprise the cultivation of a host cell transformed with a recombinant DNA vector capable of expressing and carrying a DNA sequence encoding the enzyme in question. The host cell is grown in a culture medium under conditions permitting the expression of the enzyme, and is followed by the recovery of the enzyme from the culture.

Additionally the present invention relates to the use of the composition as previously described.

By the method of the invention at least two different fractions are obtained. There are various products that may comprise such fractions.

In one embodiment the obtained gluten may be added to wheat flour of poor quality, i.e., wheat flour having low gluten content. Accordingly, flour normally used for products, such as fodder may after fortification with gluten be used for the manufacture of products, such as bread. Consequently, the present invention presents a broadening of the types of available applications for flour having low gluten content.

The gluten fraction obtained by the method of the invention is applicable in any of the applications mentioned above and in a further aspect the present invention relates to a gluten fraction consisting essentially of gluten and to a product comprising said fraction.

Further, starches may be used in products of the adhesive, gypsum, paper, corrugating, mining and food industries. Starch and starch products may also be used as adhesive compounds, such as in the production of bags and adhesive tapes, laminates and wound tubes, wall paper and poster glues, abrasive paper. Other applications include components of concrete retarders, sizing agents for synthetic, natural and mixed yarns in the textile industry, and thickeners for the printing of textiles.

In the pharmaceutical industry starch products may be used as disintegration agents in tablets and surgical glove powder. Within the ceramic industry field the addition of starch increases the strength of the ceramic products. Starches may also be applied to detergents for the purpose of being dirt-deposit inhibitors. A completely different application is in the field of oil well drilling, wherein starch solutions may be used as agents to help seal drilling cores and to increase the viscosity of drilling mud and cooling water.

Yet another application of starch is for the use in water treatment plants serving the purpose of flocculating various aqueous suspensions.

A further application is in the plastic industry, wherein starches may be used to improve the biological degradation of plastic products.

Currently one of the applications of starch is for paint stripping using wheat starch blasting. Wheat starch blasting is a user-friendly blasting process wherein wheat starch can be used in systems designed for plastic media blasting (PMB), as well as systems specifically designed for wheat starch blasting. The wheat starch abrasive media is a crystallised form of wheat starch that is non-toxic, biodegradable, and made from renewable resources. The media is similar in appearance to plastic media, except that it is softer. Wheat starch is a plentiful natural resource that is biodegradable. Waste generated from this process may be treated in a bioreactor using amylase enzymes. The wheat starch blasting process may be used for removing coatings from both metallic and composite materials. This process is easy to control. It may be used to selectively remove from one and up to all coating layers. Wheat starch blasting does not cause fatigue to the substrate surface, and it allows for moderate stripping rates, whilst maintaining a gentle stripping action.

### Experimentals

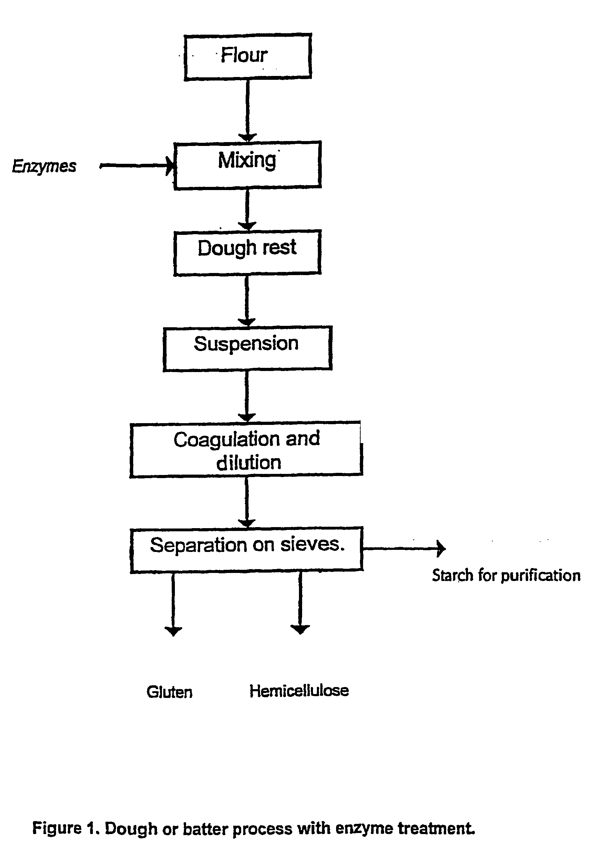

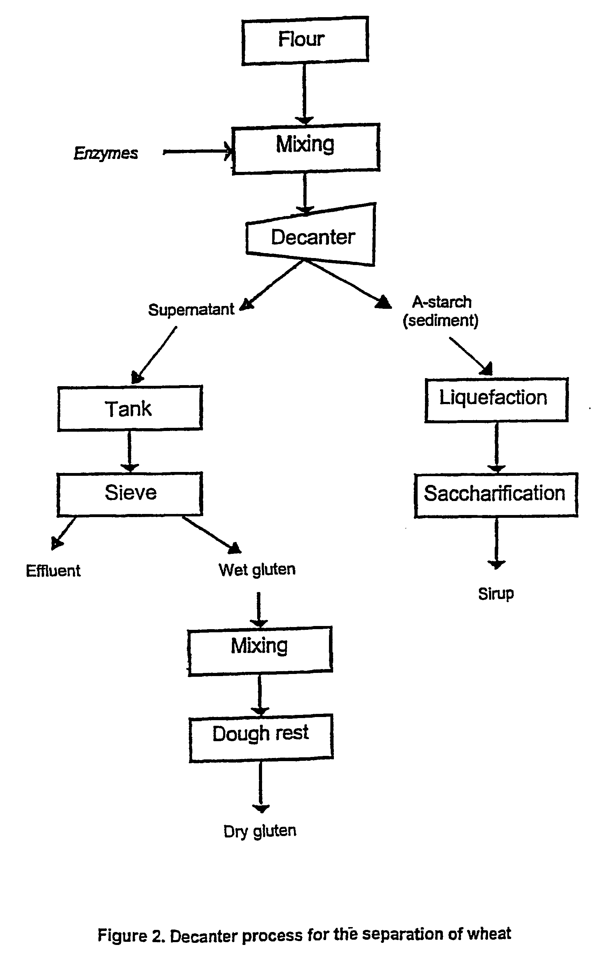

The following are examples of methods of separation of wheat flour using a transglutaminase enzyme. Fig. 1 is an illustration of the steps in one of the possible separation processes and Fig. 2 is an example of a decanter process for the separation of wheat flour.

### Example 1

5 kg of wheat flour is mixed with 3.5 L of water having a temperature of 25°C. The transglutaminase is added.

The dough is resting for approximately 8 minutes followed by the addition of 5 L of water. The dough suspension is mixed for approximately 18 minutes. After mixing the dough suspension is diluted with 4 L of water and is circulated for 20 minutes. The diluted dough suspension is then separated on screens by the addition of water.

The fractions obtained are gluten, hemicellulose and starch fractions.

### Example 2

200 kg of wheat flour is mixed with 400 L of water. The transglutaminase is added.

The dough is continuously pumped into a homogeniser at 30-50 bar and is homogenised at a temperature of approximately 35°C. After homogenising, the mixture is passed through a decanter centrifuge separating the mixture into a supernatant fraction and a pellet fraction. The supernatant comprises the gluten and the pellet comprises the starch. The supernatant is kept in a tank at a pH of approximately 7.0, and is then passed onto a 150 µ sieve. The gluten of the supernatant is thereby separated from the effluent. The wet gluten is freeze dried and milled.

The A-starch (sediment) is liquefied and subsequently saccharified and made into syrup.

## Claims

1. A method for the separation of wheat flour into one gluten fraction and at least one other fraction, comprising the steps of:
a) mixing the flour and a liquid and a transglutaminase enzyme obtaining a dough,
b) separating the dough into a fraction comprising gluten and at least one other fraction,
c) recovering at least the gluten fraction.

2. The method according to claim 1, wherein the step a) comprises
a1) mixing the flour and the transglutaminase enzyme obtaining a mixture, and
a2) adding the liquid to the mixture.

3. The method according to claim 1, wherein the step a)comprises
a3) mixing the flour and the liquid, followed by
a4) adding the enzyme.

4. The method according to claim 1, wherein the gluten fraction consists essentially of gluten.

5. The method according to claim 1, wherein the other fractions consist of essentially no gluten.

6. The method according to any of the preceding claims, wherein one of the other fractions comprises starch.

7. The method according to any of the preceding claims, wherein the dough is resting prior to separation.

8. The method according to any of the preceding claims, wherein the dough is diluted prior to separation.

9. The method according to any of the preceding claims, wherein the dough is homogenised prior to separation.

10. The method according to any of the preceding claims, wherein the dough is separated by the means of sifting.

11. The method according to any of the preceding claims, wherein the dough is separated by the means of a decanter centrifuge.

12. The method according to any of the preceding claims, wherein the dough is separated by the means of a hydrocyclone.

13. The method according to any of the preceding claims, wherein the recovered gluten fraction is subsequently dried.

14. The method according to any of the preceding claims, wherein the enzymes are selected in combination with an enzyme selected from the group consisting of hemicellulases, cellulases, xylanases, proteases and dehydrogenases.

15. The method according to any of the preceding claims, wherein the enzymes are from fungal or bacterial origin.

16. The method according to any of the preceding claims, wherein the step a) comprises mixing the flour and a liquid obtaining a dough, resting the dough, and adding a transglutaminase enzyme to the dough.

17. The method according to claim 1, wherein the dough has a pH value of between 4.5 and 8.0.

18. The method according to claim 1, wherein the dough has a temperature of between 10 and 60°C.

## Patentansprüche

1. Verfahren zur Auftrennung von Weizenmehl in eine Glutenfraktion und mindestens eine andere Fraktion, umfassend die Schritte:
a) Mischen des Mehls und einer Flüssigkeit und ein Transglutaminaseenzym unter Erhalt eines Teiges,
b) Auftrennen des Teiges in eine Gluten umfassende Fraktion und mindestens eine andere Fraktion,
c) Gewinnen zumindest der Glutenfraktion.

2. Verfahren nach Anspruch 1, wobei der Schritt a)
a1) Mischen des Mehls und des Transglutaminaseenzyms unter Erhalt eines Gemischs und
a2) Zugabe der Flüssigkeit zu dem Gemisch
umfasst.

3. Verfahren nach Anspruch 1, wobei der Schritt a)
a3) Mischen des Mehls und der Flüssigkeit, gefolgt von
a4) Zugabe des Enzyms
umfasst.

4. Verfahren nach Anspruch 1, wobei die Glutenfraktion im Wesentlichen aus Gluten besteht.

5. Verfahren nach Anspruch 1, wobei die anderen Fraktionen im Wesentlichen nicht aus Gluten bestehen.

6. Verfahren nach einem der vorangehenden Ansprüche, wobei eine der anderen Fraktionen Stärke umfasst.

7. Verfahren nach einem der vorangehenden Ansprüche, wobei der Teig vor der Auftrennung ruht.

8. Verfahren nach einem der vorangehenden Ansprüche, wobei der Teig vor der Auftrennung verdünnt wird.

9. Verfahren nach einem der vorangehenden Ansprüche, wobei der Teig vor der Auftrennung homogenisiert wird.

10. Verfahren nach einem der vorangehenden Ansprüche, wobei der Teig mittels Sieben aufgetrennt wird.

11. Verfahren nach einem der vorangehenden Ansprüche, wobei der Teig mittels einer Dekantierzentrifuge aufgetrennt wird.

12. Verfahren nach einem der vorangehenden Ansprüche, wobei der Teig mittels eines Hydrozyklons aufgetrennt wird.

13. Verfahren nach einem der vorangehenden Ansprüche, wobei die gewonnene Glutenfraktion anschließend getrocknet wird.

14. Verfahren nach einem der vorangehenden Ansprüche, wobei die Enzyme in Kombination mit einem Enzym, ausgewählt aus der Gruppe, bestehend aus Hemizellulasen, Zellulasen, Xylanasen, Proteasen und Dehydrogenasen, ausgewählt sind.

15. Verfahren nach einem der vorangehenden Ansprüche, wobei die Enzyme pilzlichen oder bakteriellen Ursprungs sind.

16. Verfahren nach einem der vorangehenden Ansprüche, wobei der Schritt a) das Mischen des Mehls und einer Flüssigkeit unter Erhalt eines Teiges, Ruhen des Teiges und Zugabe eines Transglutaminaseenzyms zu dem Teig umfasst.

17. Verfahren nach Anspruch 1, wobei der Teig einen pH-Wert zwischen 4,5 und 8,0 aufweist.

18. Verfahren nach Anspruch 1, wobei der Teig eine Temperatur zwischen 10 und 60°C aufweist.

## Revendications

1. Procédé de séparation de la farine de blé en une fraction de gluten et au moins une autre fraction, comprenant les étapes de :
a) mélanger la farine et un liquide et une enzyme transglutaminase pour obtenir une pâte,
b) séparer la pâte en une fraction comprenant du gluten et au moins une autre fraction,
c) récupérer au moins la fraction de gluten.

2. Procédé selon la revendication 1, dans lequel l'étape a) comprend :
a1) mélanger la farine et l'enzyme transglutaminase pour obtenir un mélange, et
a2) ajouter le liquide au mélange.

3. Procédé selon la revendication 1, dans lequel l'étape a) comprend :
a3) mélanger la farine et le liquide, suivi par
a4) aj outer l'enzyme.

4. Procédé selon la revendication 1, dans lequel la fraction de gluten est essentiellement constituée de gluten.

5. Procédé selon la revendication 1, dans lequel les autres fractions sont essentiellement non constituées de gluten.

6. Procédé selon l'une quelconque des revendications précédentes, dans lequel l'une des autres fractions comprend de l'amidon.

7. Procédé selon l'une quelconque des revendications précédentes, dans lequel la pâte repose avant la séparation.

8. Procédé selon l'une quelconque des revendications précédentes, dans lequel la pâte est diluée avant la séparation.

9. Procédé selon l'une quelconque des revendications précédentes, dans lequel la pâte est homogénéisée avant la séparation.

10. Procédé selon l'une quelconque des revendications précédentes, dans lequel la pâte est séparée à l'aide d'un tamisage.

11. Procédé selon l'une quelconque des revendications précédentes, dans lequel la pâte est séparée à l'aide d'une centrifugeuse décanteuse.

12. Procédé selon l'une quelconque des revendications précédentes, dans lequel la pâte est séparée à l'aide d'un hydrocyclone.

13. Procédé selon l'une quelconque des revendications précédentes, dans lequel la fraction de gluten récupérée est ultérieurement séchée.

14. Procédé selon l'une quelconque des revendications précédentes, dans lequel les enzymes sont choisis en combinaison avec un enzyme choisi dans le groupe constitué par les hemicellulases, les cellulases, les xylanases, les protéases et les déshydrogénases.

15. Procédé selon l'une quelconque des revendications précédentes, dans lequel les enzymes sont d'origine fongique ou bactérienne.

16. Procédé selon l'une quelconque des revendications précédentes, dans lequel l'étape a) comprend le mélange de la farine et d'un liquide pour obtenir une pâte, la mise en repos de la pâte, et l'ajout d'une enzyme transglutaminase à la pâte.

17. Procédé selon la revendication 1, dans lequel la pâte a une valeur de pH comprise entre 4,5 et 8,0.

18. Procédé selon la revendication 1, dans lequel la pâte a une température allant de 10 à 60°C.
